## Europäisches Patentamt
## European Patent Office
## Office européen des brevets

(19)

(11) Numéro de publication: **0 088 671**
**B1**

(12) # FASCICULE DE BREVET EUROPEEN

(45) Date de publication du fascicule du brevet:
06.08.86

(51) Int. Cl.⁴: **G 11 B 7/12**, G 02 B 13/10

(21) Numéro de dépôt: **83400390.7**

(22) Date de dépôt: **25.02.83**

(54) **Tête optique dans un dispositif d'enregistrement-lecture d'un support d'information.**

(30) Priorité: **09.03.82 FR 8203936**

(43) Date de publication de la demande:
**14.09.83 Bulletin 83/37**

(45) Mention de la délivrance du brevet:
**06.08.86 Bulletin 86/32**

(84) Etats contractants désignés:
**DE GB IT NL SE**

(56) Documents cités:
**EP - A - 0 033 052**
**DE - A - 3 131 212**
**FR - A - 2 459 513**
**US - A - 4 203 652**

**ELEKTRONIK, vol. 27, no. 15, décembre 1978, pages 31-34, Munich, DE.**

(73) Titulaire: **THOMSON-CSF, 173, Boulevard Haussmann, F-75379 Paris Cedex 08 (FR)**

(72) Inventeur: **Leterme, Dominique, THOMSON-CSF SCPI 173, bld Haussmann, F-75379 Paris Cedex 08 (FR)**
Inventeur: **Le Merer, Jean-Pierre, THOMSON-CSF SCPI 173, bld Haussmann, F-75379 Paris Cedex 08 (FR)**

(74) Mandataire: **Weinmiller, Jürgen et al, Zeppelinstrasse 63, D-8000 München 80 (DE)**

## Description

L'invention se rapporte au domaine des disques supports d'information, enregistrables et lisibles optiquement, l'information étant enregistrée sous forme d'une perturbation d'une couche sensible à un rayonnement, par exemple une couche thermosensible.

Une tête optique peut comporter:
- un laser semiconducteur type AsGa;
- un objectif de mise à l'infini;
- un cube séparateur de polarisation;
- une lame quart d'onde;
- un objectif de focalisation;
- un ensemble de servomoteurs pour la focalisation sur le disque et pour le suivi de piste.

Le dispositif de l'invention permet de réaliser une tête optique intégrée simplifiée grâce à un ensemble optique appelé anamorphoseur-séparateur. Cette tête optique réalise à la fois les fonctions d'émission d'un faisceau à partir d'une source laser et de réception du faisceau réfléchi par des moyens optoélectriques de détection, ces deux fonctions étant parfaitement découplées. Elle comprend un nombre réduit d'éléments, d'où un faible encombrement et peu de réglages.

Ainsi par rapport aux dispositifs de l'art antérieur tels que décrits dans les documents DE-A-131 212 et FR-A 2 459 513, qui décrivent des têtes optiques comportant un cube séparateur de polarisation et un ensemble additionel pour vendre circulaire la section elliptique d'un faisceau collimaté, le dispositif de l'invention présente l'avantage de réduire le nombre d'éléments de la tête, ce qui diminue le nombre des supports, le nombre de faces optiques, l'encombrement de la tête et donc son poids et son prix.

Le dispositif de l'invention a pour objet une tête optique dans un dispositif d'enregistrement-lecture d'un support d'information comprenant au moins une piste, comportant une source laser à semiconducteur émettant un faisceau collimaté, polarisé selon une direction déterminée et éclairant via un miroir de renvoi la pupille d'entrée d'un objectif projetant un spot d'éclairement dudit support, et des moyens d'asservissement permettant de réaliser le suivi par ce spot d'éclairement d'une piste portée par ledit support, des moyens optiques séparateurs positionnés entre cette source et ce miroir de renvoi pour renvoyer vers des moyens photodétecteurs le rayonnement recueilli par cet objectif en provenance de ce support d'information, une lame quart d'onde placée entre ces moyens séparateurs et ce support d'informations; cette lame quart d'onde permettant de faire tourner la polarisation de la lumière réfléchie par le support d'information de $\pi/2$ par rapport à celle de la lumière incidente, caractérisée en ce que ces moyens séparateurs sont constitués par la face plane d'entrée qui est la base d'un prisme isolète qui reçoit obliquement et directement le rayonnement émis dans un milieu de faible indice par la source laser, ladite face d'entrée ayant subi un traitement séparateur de polarisation qui transmet complètement la lumière incidente issue de la source laser et qui réfléchit complètement la lumière réfléchie par le support d'information dont la direction de polarisation est orthogonale à celle du faisceau émis par la source laser (1): ladite face d'entrée (13) étant orientée de façon anamorphosante, afin de fournir un faisceau à section circulaire à ladite pupille d'entrée.

D'autres caractéristiques et avantages de l'invention apparaîtront dans la description ci-après, en référence aux figures annexées parmi lesquelles:

- la figure 1 illustre un dispositif de l'art connu;
- les figures 2 et 3 sont deux figures explicatives de points particuliers de l'invention;
- la figure 4 illustre une tête optique selon l'invention;
- la figure 5 illustre un aspect de détail de la tête optique selon l'invention;
- la figure 6 illustre une possibilité d'utilisation de tête optique.

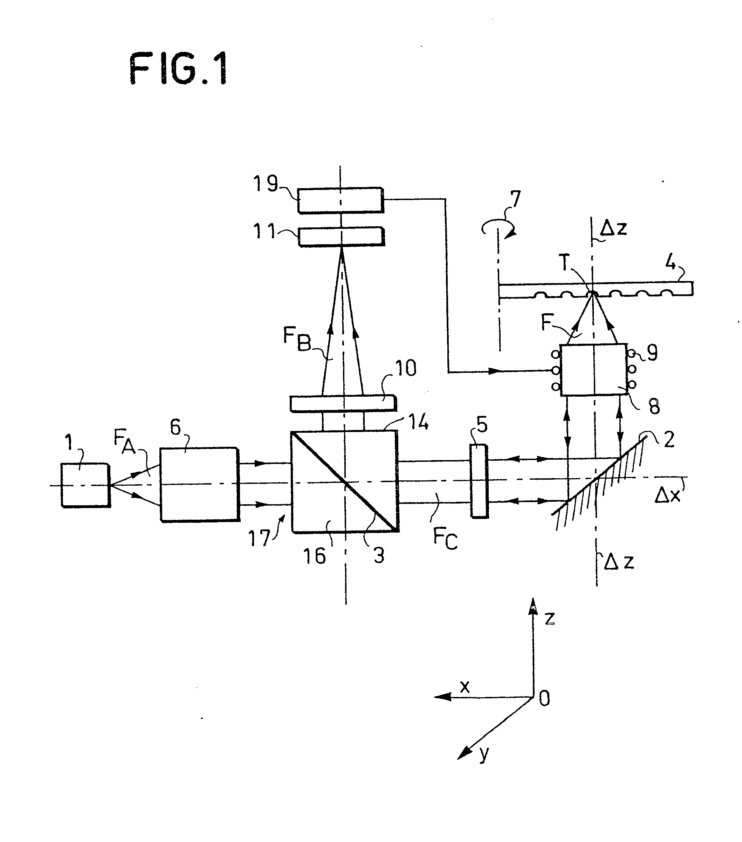

La figure 1 représente un dispositif de l'art connu. Si on considère cette figure 1, le laser semiconducteur est polarisé linéairement suivant le plan de la jonction, ce qui permet d'utiliser un séparateur de faisceau par polarisation 16. Celui-ci peut être, par exemple un cube constitué de deux prismes collés. La surface de séparation 3 constitué par l'hypothénuse des deux cubes est traitée de façon à être séparatrice de polarisation: elle transmet en totalité des rayonnements ayant une polarisation donnée et elle réfléchit en totalité des rayonnements ayant une polarisation à 90° de la précédente.

Ainsi sur la figure 1 le rayonnement $F_A$ provenant de la source laser est intégralement transmis vers le disque 4. Un objectif 6 d'axe optique confondu avec l'axe $\triangle_X$ est placé entre le laser 1 et le séparateur de faisceau par polarisation 16. A sa sortie le rayonnement est rendu à peu près parallèle pour atteindre en sa totalité la face 17 du séparateur de faisceau 16. Cet objectif est conçu de façon à ne pas présenter d'aberrations sphériques pour les ouvertures maximales du faisceau $F_A$ formés par le laser 1.

Le faisceau $F_C$ transmis par ce séparateur par polarisation 16 atteint ensuite la lame parallèle quart d'onde 5. Cette lame est orientée à 45° de la polarisation du faisceau incident $F_C$.

Cette lame quart d'onde permet de réaliser un découplage optique. En effet les rayonnements issus de la source 1 et réfléchis par la surface du support d'information 4 n'auront plus une même polarité et ne pourront donc interférer.

De plus, l'onde incidente, polarisée linéairement, ressort de cette lame parallèle quart d'onde 5 polarisée circulairement et par exemple dans le sens levogyre. Cette onde va être transmise aux éléments de la tête d'enregistrement-lecture et réfléchie par le disque. Elle est retournée ensuite vers la lame quart d'onde 5 toujours polarisée circulairement mais dans le sens destrogyre. Il s'en suit que cette onde est retournée vers le séparateur de faisceau 16, après traversée de la lame quart d'onde 5, polarisée linéairement mais à 90° de la polarisation originale. Il s'en suit qu'à la traversée du séparateur de faisceau 16 il y a réflexion sur la face 3.

Ainsi le faisceau réfléchi par la surface du disque 4 de la figure 1 est séparé du faisceau émis par le laser 1 grâce à la lame quart d'onde 5 et à la surface séparatrice 3 d'un cube séparateur par polarisation 16. Lorsque le faisceau F est parfaitement focalisé sur le disque, formant une tâche quasi ponctuelle T, après traversée de la lentille convergente 10 qui peut être par exemple une lentille plan convexe, le faisceau de retour $F_B$ se focalise en un point. Lors de la lecture, la puissance du faisceau $F_B$, qui peut être détectée au voisinage de ce point, par des moyens de détection 11 est fonction de l'état de surface du disque 4 au point T. La présence d'une empreinte gravée en creux indique une absence ou une diminution du pouvoir réfléchissant du disque 4. Au contraire, dans les zones non gravées, le faisceau est totalement réfléchi. Ainsi, la puissance du faisceau $F_B$ est modulée au fur et à mesure de la rotation du disque et de l'avance radiale de la tête, au rythme de la modulation de relief préalablement inscrite sur le disque. Par ailleurs, tant au cours de l'enregistrement que de la lecture, il est souhaitable que les moyens de détection 11 puissent détecter les erreurs de focalisation (le point T n'est pas exactement dans le plan du disque) exprimées sous la forme d'un décalage en z. Les signaux de détection de ces erreurs sont alors utilisés par l'intermédiaire du circuit 19 pour asservir la position de l'objectif 8. Ces moyens de détection peuvent également permettre de détecter les erreurs de suivi radial (le point T n'est pas situé sur la piste gravée, dans le cas de la lecture, ou sur la piste que l'on souhaite tracer généralement matérialisée sous la forme d'une piste prégravée dans le cas de l'enregistrement), exprimées sous la forme d'un décalage sur l'axe radial du disque 4.

Sur le parcours du faisceau $F_C$ on positionne un miroir galvanométrique 2 dont le pivotement autour d'un axe assure l'asservissement radial. Ce miroir de renvoi 2 est inséré avant l'objectif 8 de façon à dévier selon un axe △z le faisceau $F_C$ reçu selon l'axe △x. L'objectif 8 focalise alors le faisceau F sur le disque support d'information 4. Ce disque est animé d'un mouvement de rotation symbolisé par la flèche 7.

Mais le faisceau émis par le laser semiconducteur est elliptique. Ainsi le faisceau lumineux sortant d'un laser semiconducteur peut avoir une divergence de 30° dans le sens perpendiculaire à la jonction et de 10° dans le plan parallèle, soit un facteur de 3 entre les deux axes, ce laser étant polarisé linéairement dans le sens de la jonction.

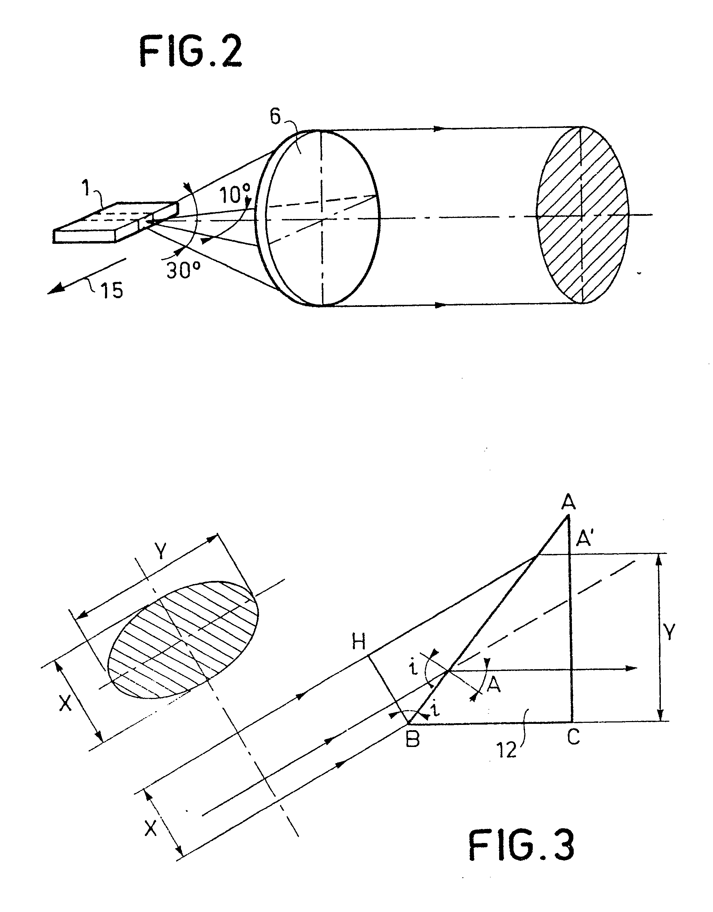

Sur la figure 2 un laser semiconducteur 1 associé à un objectif 6 suffisamment ouvert génère un faisceau de lumière parallèle à section elliptique, polarisé suivant la direction 15.

Pour avoir le maximum de puissance et la plus petite tache sur le disque, il faut rendre le faisceau circulaire. Un dispositif anamorphoseur permet alors de transformer le faisceau de section elliptique sortant du laser en faisceau cylindrique.

Le faisceau tombant sur un dioptre dans certaines conditions (grand axe de l'ellipse perpendiculaire au plan d'incidence) perdra de son ellipticité. Ainsi, un faisceau de section ellptique comme représenté à la figure 3 tombant sur un dioptre 12 perdra de son ellipticité suivant

$$\frac{Y}{X} = \frac{\cos A}{\cos i}.$$

Avec A'C = Y et BH = X
de plus on a: $\sin i = n \sin A$
avec n étant l'indice du matériau dont est composé le dioptre.

soit $m = \dfrac{Y}{X}$

$$\Rightarrow m = \frac{\cos A}{\cos i} = \frac{\cos A}{\sqrt{1-n^2\sin^2 A}}$$

$$\Rightarrow 1-n^2\sin^2 A = \frac{\cos^2 A}{m^2} = \frac{1}{m^2}(1-\sin^2 A)$$

$$\Rightarrow \sin A = \sqrt{\frac{1-1/m^2}{n^2-1/m^2}}$$

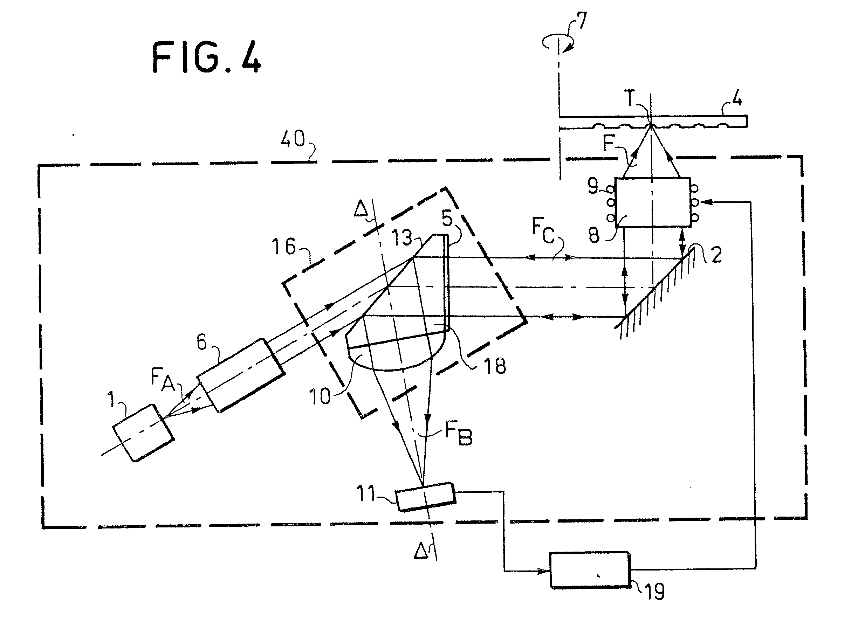

Dans le dispositif de l'invention l'anamorphose du faisceau est obtenue en inclinant le faisceau par rapport à la normale de la face d'entrée d'un prisme 18 qui est la base d'un prisme isocèle. Ce prisme 18 est représenté à la figure 4 qui illustre le dispositif de l'invention. Sur cette figure 4 les différents éléments de la figure 1 ont été repris avec les mêmes numéros.

Ce prisme joue aussi le rôle de séparateur de faisceau par polarisation, c'est pourquoi sa face d'entrée 13 a subi un traitement séparateur de polarisation qui transmet complétement la lumière incidente dont la polarisation est orientée suivant le petit axe de l'ellipse, et réfléchit complétement la lumière polarisée à 90° qui revient après reflexion sur la surface du disque 4.

Ainsi ce prisme 18 joue le rôle d'anamorphoseur: Si m est l'ellipticité du faisceau (rapport du grand axe sur le petit axe), on choisira l'angle de ce prisme 18 isocèle A avec:

$$\sin A = \sqrt{\frac{1-1/m^2}{n^2-1/m^2}}$$

où n est l'indice du prisme et i l'angle d'incidence du faisceau sur ce prisme, avec $\sin i = n \sin A$ pour faire sortir les faisceaux normalement aux côtés du prisme isocèle, aussi bien à l'aller qu'au retour. Par exemple, pour m=2,56, nous avons un prisme en verre d'indice n=1,516 isocèle en B d'angle A=39°9' et l'incidence est 72°23'.

Le dispositif de l'invention reprend les principaux éléments du dispositif de l'art connu illustré à la figure 1. Mais l'élément séparateur de faisceau par polarisation est réalisé par un prisme anamorphoseur dont la face d'entrée a subi un traitement séparateur par polarisation. Ce prisme ayant été décrit précédemment.

La lame quart d'onde 5 qui permet de faire tourner la polarisation de la lumière réfléchie par le disque de 90° par rapport à celle de la lumière incidente, taillée orientée dans un carré dont les lignes neutres sont les diagonales, a été collée sur l'un des côtés du prisme 18.

L'objectif 10 peut être réalisé avec une lentille plan convexe qui peut être, par exemple, collée sur l'autre côté 14 du prisme 18 comme représenté à la figure 4. Ce qui permet la focalisation sur les moyens de détection 11.

Ainsi selon l'invention, on peut réaliser une tête intégrée 40, c'est à dire dont les éléments sont solidaires d'un même support. Cette tête optique intégrée 40 comprend:

- un laser semiconducteur type AsGa 1;
- un objectif de mise à l'infini 6;
- un ensemble anamorphoseur-séparateur 16;
- un miroir de renvoi 2;
- un objectif 8.

L'ensemble anamorphoseur-séparateur 16, objet de l'invention, comprend un prisme isocèle 18, une lame quart d'onde 5 orientée et collée, et éventuellement une lentille 10 collée pour la focalisation du faisceau de retour.

Les moyens photodétecteurs 11 peuvent être une cellule deux quadrants par exemple. Cette cellule réalise alors trois fonctions: par différence, on obtient le signal d'erreur de focalisation (senseur asymétrique); par sommation, on obtient le signal Haute Fréquence de lecture et, par échantillonnage le signal d'erreur de suivi de piste. Mais tout autre type de senseur peut être utilisé.

Ce peut être, aussi, une cellule quatre quadrants par exemple.

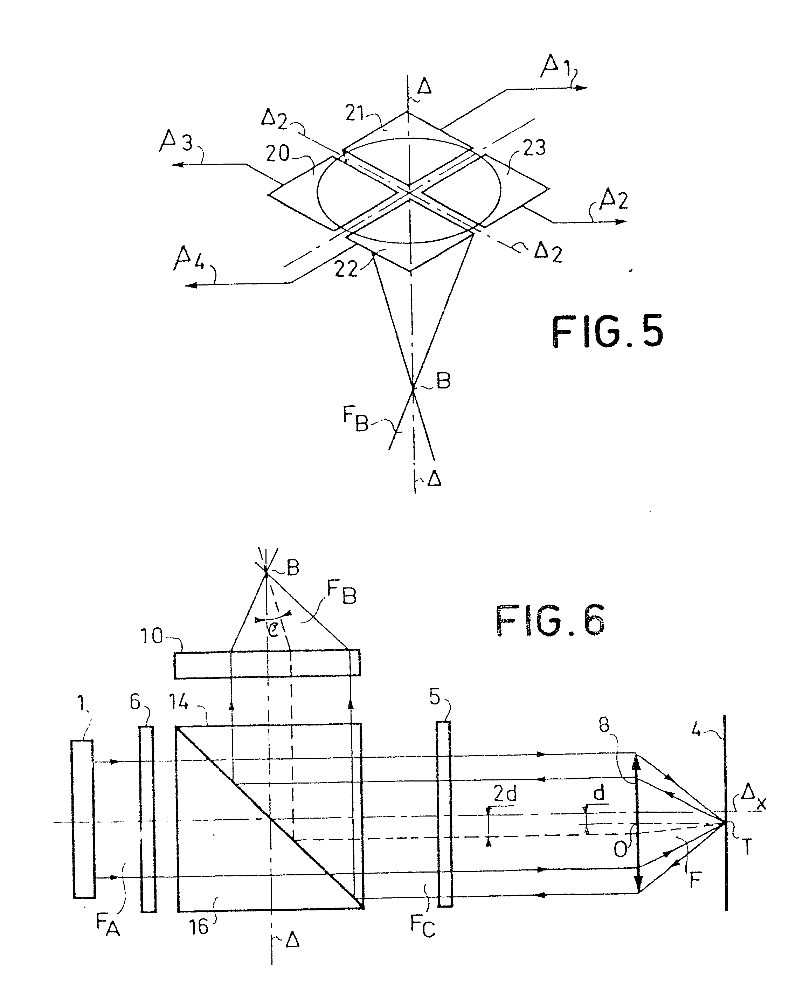

L'organe photodétecteur 11 comprend, alors, quatre photodétecteurs disposés selon quatre quadrants comme représenté à la figure 5. Ces photodétecteurs sont disposés perpendiculairement à l'axe $\triangle$ La lentille 10 focalise sur le plan de ces photodétecteurs le faisceau réfléchi pour permettre de détecter les erreurs de focalisation (le point de focalisation T n'est pas exactement dans le plan du disque) exprimées sous la forme d'un décalage parallèle à $\triangle z$, et les erreurs de suivi radial (le point de focalisation T, n'est pas situé sur la piste gravée, dans le cas de la lecture; ou sur la piste que l'on souhaite tracer généralement matérialisée sous la forme d'une piste prégravée dans le cas de l'enregistrement), exprimée sous la forme d'un décalage selon l'axe radial du disque. Et enfin, dans le cas de la lecture, ces moyens photodétecteurs, sont fonction de l'état de surface du disque au point de convergence T. La présence d'une empreinte gravée en creux implique une interruption ou une diminution du pouvoir réfléchissant du disque 4. Au contraire, dans les zones non gravées, le faisceau est totalement réfléchi. Ainsi la puissance du faisceau de lecture qui atteint les photodétecteurs est modulé au fur et à mesure de la rotation du disque et de l'avance radiale de la tête, au rythme de la modulation de relief préalablement inscrite sur ce disque.

Un mode de réalisation de ces photodétecteurs est représenté à la figure 5. Il permet d'obtenir un signal d'erreur de suivi radial, un signal d'erreur de focalisation, et éventuellement un signal de lecture. Les moyens de détection comprennent quatre photodétecteurs 50, 51, 52, 53 disposés dans un plan perpendiculaire à l'axe $\triangle$.

Les quatre photodétecteurs sont disposés en carré autour de l'axe $\triangle$, le plus proche possible les uns des autres, et de telle sorte qu'en l'absence de toute erreur de focalisation, la puissance du faisceau $F_B$ se répartisse de façon égale dans les quatre photodétecteurs, et que, avec ou sans erreurs, la tache formée dans le plan des photodétecteurs par le faisceau $F_B$ soit entièrement contenue dans leur superficie, afin qu'ils détectent la quasi totalité de la puissance du faisceau $F_B$. Ainsi la somme des signaux de sortie respectifs de ces quatre photodétecteurs $s_i$, $s_2$, $s_3$, $s_4$ indique la présence ou non d'une empreinte sur le disque à l'emplacement de la tache et constitue donc un signal de lecture. Le faisceau $F_B$ est un faisceau stigmatique qui converge donc en un point B'. La tache optenue dans le plan des photodétecteurs est circulaire et centrée sur l'axe $\triangle$.

Dans le cas de la méthode de détection de l'erreur de focalisation de l'art connu, dite méthode asymétrique, décrite dans la demande de brevet européen publiée sous le N° 0 029 755, on crée un décalage d entre les axes du dispositif optique et l'axe $\triangle_x$, le faisceau F étant stigmatique. Si on considère le dispositif décrit à la figure 6, en ne faisant pas figurer volontairement le miroir de renvoi 2, inutile pour ces explications, l'axe optique ne passant plus par le centre optique O de l'objectif 8, le faisceau réfléchi par le disque 4 ne coïncide plus avec le faisceau incident; même en l'absence d'erreur de focalisation les deux faisceaux sont décalés de 2d. Il en résulte après traversée de la lentille 10, un décalage angulaire $\triangle$. Le faisceau $F_B$ converge au point B' mais son axe forme un angle β avec l'axe $\triangle$. Une défocalisation provoque alors dans un plan de détection perpendiculaire à l'axe $\triangle$ un déplacement de la tache lumineuse qui peut être détecté au moyen de deux photodétecteurs, disposés de façon à recevoir la même fraction d'énergie lumineuse lorsque l'erreur de focalisation est nulle.

En cas d'erreur de suivi radial lorsque le point de focalisation sur le disque 4 est décalé par rapport à la piste prégravée ou à la piste porteuse d'information, seule une partie du faisceau incident se trouve réfléchie et l'intensité n'est plus également répartie entre deux photodétecteurs placés symétriquement par rapport à l'axe $\triangle$. Si l'on fait en sorte que le décalage d créé entre l'axe optique et l'axe $\triangle_x$ corresponde à un décalage sur le disque dans une direction tangentielle aux sillons enregistrés, il est alors nécessaire de disposer quatre photodétecteurs disposés en carré autour de l'axe $\triangle$.

La tête optique intégrée de l'invention peut être employée dans tous le enregistreurs-lecteurs et dans tous les lecteurs de disques optiques utilisant une anamorphose et une séparation de polarisation d'un faisceau de laser à semiconducteur.

## Revendications

1. Tête optique dans un dispositif d'enregistrement-lecture d'un support d'information (4) comprenant au moins une piste, comportant une source laser (1) à semiconducteur émettant un faisceau collimaté, polarisé selon une direction déterminée et éclairant via un miroir de renvoi (2) la pupille d'entrée d'un objectif (8) projetant un spot d'éclairement dudit support, et des moyens d'asservissement (19), permettant de réaliser le suivi par ce spot d'éclairement d'une piste portée par ledit support, des moyens optiques séparateurs positionnés entre cette source (1) et ce miroir de renvoi (2) pour renvoyer vers des moyens photodétecteurs (11) le rayonnement recueilli par cet objectif (8) en provenance de ce support d'information (4), une lame quart d'onde (5), placée entre ces moyens séparateurs et ce support d'informations; cette lame quart d'onde permettant de faire tourner la polarisation de la lumière réfléchie par le support d'information de $\pi/2$ par rapport à celle de la lumière incidente, caractérisée en ce que ces moyens séparateurs sont constitués par la face plane d'entrée (13) qui est la base d'un prisme isocèle (18) qui reçoit obliquement et directement le rayonnement émis dans un milieu de faible indice par la source laser (1), ladite face d'entrée (13) ayant subi un traitement séparateur de polarisation qui transmet complètement la lumière incidente issue de la source laser (1) et qui réfléchit complètement la lumière réfléchie par le support d'information dont la direction de polarisation est orthogonale à celle du faisceau émis par la source laser (1): ladite face d'entrée (13) étant orientée de façon anamorphosante, afin de fournir un faisceau à section circulaire à ladite pupille d'entrée.

2. Tête optique selon la revendication 1, caractérisée en ce que la lame quart d'onde (5) est collée sur une autre face du prisme (18).

3. Tête optique selon la revendication 1, caractérisée en ce qu'elle comprend une lentille plan-convexe (10) située entre le prisme (18) et les moyens photodétecteurs (11).

4. Tête optique selon la revendication 3, caractérisée en ce que la lentille plan-convexe (10) est collée à la troisième face du prisme (18).

5. Tête optique selon la revendication 1, caractérisée en ce que le faisceau émis par la source laser a la forme d'une ellipse, les deux angles égaux du prisme A étant donnés par la relation

$$\sin A = \sqrt{\frac{1-1/m^2}{n^2-1/m^2}}$$

m étant le rapport de grand axe sur le petit axe de l'ellipse et n l'indice du prisme, l'angle d'incidence i du faisceau sur la face du prisme étant donné par la relation sin i=n sin A.

6. Tête optique selon la revendication 1, caractérisée en ce que les moyens photodétecteurs (11) sont situés dans un plan perpendiculaire à la direction de propagation de la lumière réfléchie par ledit prisme (18).

7. Tête optique selon la revendication 6, caractérisée en ce que les moyens photodétecteurs (11) sont constitués d'une cellule à deux quadrants.

8. Tête optique selon la revendication 6, caractérisée en ce que les moyens photodétecteurs (11) sont constitués d'une cellule à quatre quadrants.

9. Tête optique selon l'une quelconque des revendications précédentes, caractérisée en ce que le support d'information (4) est un disque (4).

## Patentansprüche

1. Optischer Kopf in einer Schreib-Lese-Einrichtung für einen Informationsträger (4) mit mindestens einer Spur, wobei der Kopf aufweist:
- eine Halbleiterlaserquelle (1), die einen kollimatierten und gemäss einer gegebenen Richtung polarisierten Strahl aussendet, der über einen Umlenkspiegel (2) die Eingangsöffnung eines Objektivs (8) beleuchtet, das einen Lichtpunkt des Trägers projiziert,
- Regelungsmittel (19), durch die mit dem Lichtpunkt eine Spur auf dem Träger verfolgt werden kann,
- optische Trennmittel, die zwischen der Quelle (1) und dem Umlenkspiegel (2) liegen, um die vom Informationsträger (4) über das Objektiv (8) kommende Strahlung auf Lichtdetektormittel (11) zu lenken,
- ein $\lambda/4$-Plättchen (5), das zwischen den Trennmitteln und dem Informationsträger angeordnet ist und eine Drehung der Polarisation des vom Informationsträger reflektierten Lichts um $\pi/2$ bezüglich der Polarisation des einfallenden Lichts bewirkt, dadurch gekennzeichnet, dass die Trennmittel von einer ebenen Eingangsfläche (13) gebildet werden, die die Basis eines gleichschenkligen Prismas (18) bildet und in schräger Richtung und direkt die von der Laserquelle (1) in ein Milieu mit niedrigem Index emittierte Strahlung empfängt, wobei diese Eingangsseite (13) einer Polarisationstrennbehandlung unterzogen wurde und das von der Laserquelle (1) ausgehende einfallende Licht vollständig durchlässt, während das vom Informationsträger reflektierte Licht, dessen Polarisationsrichtung senkrecht auf der des von der Laserquelle (1) emittierten Strahls liegt, vollständig reflektiert wird, wobei die Eingangsseite (13) anamorphosierend ausgerichtet ist, um einen Strahl mit kreisförmigem Querschnitt an die Eingangsöffnung zu liefern.

2. Optischer Kopf nach Anspruch 1, dadurch gekennzeichnet, dass das λ/4-Plättchen (5) auf eine andere Seite des Prismas (18) aufgeklebt ist.

3. Optischer Kopf nach Anspruch 1, dadurch gekennzeichnet, dass er eine eben-konvexe Linse (10) zwischen dem Prisma (18) und den Lichtdetektormitteln (11) enthält.

4. Optischer Kopf nach Anspruch 3, dadurch gekennzeichnet, dass die eben-konvexe Linse (10) auf die dritte Seite des Prismas (18) aufgeklebt ist.

5. Optischer Kopf nach Anspruch 1, dadurch gekennzeichnet, dass der von der Laserquelle emittierte Strahl eine elliptische Form hat und die beiden gleichen Winkel A des Prismas durch folgende Gleichung gegeben sind

$$\sin A = \sqrt{\frac{1-1/m^2}{n^2-1/m^2}}$$

wobei m das Verhältnis der grossen Achse zur kleinen Achse der Ellipse und n den Index des Prismas bildet und der Einfallswinkel i des Strahls auf die Prismenseite durch die Gleichung gegeben ist

$$\sin i = n.\sin A.$$

6. Optischer Kopf nach Anspruch 1, dadurch gekennzeichnet, dass die Lichtdetektormittel (11) in einer zur Ausbreitungsrichtung des von dem Prisma (18) reflektierten Lichts senkrechten Ebene angeordnet sind.

7. Optischer Kopf nach Anspruch 6, dadurch gekennzeichnet, dass die Detektormittel (11) von einer Zweiquadrantenzelle gebildet werden.

8. Optischer Kopf nach Anspruch 6, dadurch gekennzeichnet, dass die Lichtdetektormittel (11) von einer Vierquadrantenzelle gebildet werden.

9. Optischer Kopf nach einem beliebigen der vorhergehenden Ansprüche, dadurch gekennzeichnet, dass der Informationsträger (4) eine Scheibe (4) ist.

**Claims**

1. An optical head in a write-read-device for an information carrier (4) having at least one track, the head comprising
- a semi conductor laser source (1) emitting a collimated beam, which is polarized according to a predetermined direction and which illuminates via a deflection mirror (2) the input pupil of an objective (8) projecting a light spot of said carrier,
- and control means (19) able to make the light spot follow a track on said support,
- optical separator means located between said source (1) and said reflection mirror (2) for reflecting the radiation coming from the information carrier through said objective (8) onto photodetector means (11),
- a λ/4-plate (5) located between these separator means and the information carrier and making the polarization of the light reflected by the information carrier rotate at a rate of π/2 with respect to the polarization of the incident light, characterized in that said separator means are constituted by the planar input face (13) which is the basis of an isosceles prism (18) and receives at oblique angle and directly the radiation emitted into a low index medium by the laser source (1), said input face (13) having been treated to become a polarization separator transmitting completely the incident light coming from the laser source (1) and reflecting completely the light which is reflected by the information carrier and the polarization direction of which is perpendicular of that of the beam emitted by the laser source (1), said input face (13) being directed in an anamorphosic manner in order to deliver a beam of circular cross-section to said input pupil.

2. An optical head according to claim 1, characterized in that the λ/4-plate (5) is glued onto another surface of the prism (18).

3. An optical head according to claim 1, characterized in that it comprises a planar-convex lens (10) located between the prism (18) and the photodetector means (11).

4. An optical head according to claim 3, characterized in that the planar-convex lens (10) is glued onto the surface of the prism (18).

5. An optical head according to claim 1, characterized in that the beam emitted by the laser source has an elliptic shape, the two identical angles A of the prism being defined by the relation

$$\sin A = \sqrt{\frac{1-1/m^2}{n^2-1/m^2}}$$

m being the ratio between the large and the small axis of the ellipse and n being the index of the prism, the angle i of beam incidence onto the surface of the prism being given by the relation

$$\sin i = n.\sin A.$$

6. An optical head according to claim 1, characterized in that the photodetector means (11) are situated in a plane which is perpendicular to the direction of propagation of the light reflected by said prism (18).

7. An optical head according to claim 6, characterized in that the photodetector means (11) are constituted by a cell having two quadrants.

8. An optical head according to claim 6, characterized in that the photodetector means (11) are constituted by a cell having four quadrants.

9. An optical head according to any one of the preceding claims, characterized in that the information carrier (4) is a disk (4).

# FIG.1

# FIG.2

# FIG.3

FIG. 4

# FIG.5

# FIG.6